# EUROPEAN PATENT APPLICATION

(11) **EP 2 085 859 A1**
(43) Date of publication of application: **05.08.2009**
(21) Application number: 06761376.0
(22) Date of filing: 07.07.2006
(51) Int. Cl.: G06F 3/00

(54) **A PORTABLE COMPUTER KEYBOARD**

(71) Applicant: Huang, Ximing, Beijing 102600 (CN)
(72) Inventor: Huang, Ximing, Beijing 102600 (CN)
(74) Representative: Vossius & Partner
(86) International application number: PCT/CN2006/001608
(87) International publication number: WO 2007/006216

(57) **Abstract**

A portable computer keyboard utilizes the motions of pressing and releasing a button to enter two key positions. Thus a few key positions shall replace the present PC keyboard and reach the same speed. Using a redial key position shall avoid the waste of motions during the repeat of a key position.

## Description

### FIELD

The invention is concerned with a portable computer keyboard. It is applied to PCs, cell phones, telephones, remote controllers, etc.

### BACKGROUND

In general, a keyboard is big and quick, or small but slow. Is there a way to be both quick and small?

### DETAILS

In this invention, you should find a keyboard with only a few key positions, reaching a speed of a big keyboard of a PC.

In the past, a button would be pressed and released to make one input, that is to say, two motions for one input. In this invention, one input is made by only one motion.

A key position is a position to make an input when moving onto which or moving away from which. Moving onto a key position then moving away is called passing through a key position. A key position is abbreviated as a kp in the following.

There are various types of kps, for example:
1. Buttons.
2. Marks on a writing board.
3. Marks on a touch screen.
4. Marks on a surface for surveying.
5. Marks on a displaying screen. Once the cursor is on or through a mark, without pressing and releasing a button of the mouse, there should be an input.

Pressing a button is one motion. There are various types of one motion;
1. Moving along a straight line in the air.
2. Moving along a straight line on a flat surface.
3. Moving along a shortest line on a curved surface. Once the curved surface is stretched to be a flat surface, the shortest line should be a straight line.
4. Rotating. Such as rotating a tracking ball, or moving along an arc on a ball shaped surface.

On the way from one kp to another, there may be at least one kp revocable or auxiliary.

As for a revocable kp, passing through it from one kp to another by one motion, equals that without it. For example, moving along a straight line from the kp marked 5 (abbreviated as kp 5) to kp 0 to kp 6 , should enter kp 5, kp 0 and kp 6 which is equal to that of entering kp 5 and kp 6.

As for an auxiliary kp, passing through it from one kp to another by one motion, it should give only auxiliary alterations.

For example, moving along a straight line from kp 5 to kp 0 to kp 1 to kp 2 to kp 6, the input of kp 0 is revoked, the input of kp 1 shall make the next character shine for a while, the input of kp 2 shall make the last character shine for a while.

In another case, moving from kp5 to kp 6 without passing through kp 1 and kp2 shall not enter kp 6, then kp 1 and kp 2 work as a locking nut to prevent moving from kp 5 to kp 6 out of the straight line.

In other case, the input of kp 2 shall make a sound for a second.

There is a problem when a kp needs to be repeated: move away without moving to another kp and move back. If it is known at first that the kp shall be repeated, then move to it and move away by one motion.

To overcome the above problem, once a kp is entered, the input of a redial kp is equal to that of the kp. Thus the repeat should happen between a kp and a redial kp.

As for a keyboard having 4 or less kps, the present touch screen has shown the similar characteristic, you shall move from one kp to another along a straight line without passing through any other kps. But there is a big difference: the keyboard shall be used for chief and continuous input such as a word or a file, or be used for emergency input such as the 4 directions of a joystick.

### DESCRIPTION OF DRAWINGS

Figure 1 and 2: 12 or 13 kps.
Figure 3 and 4: 7 kps.
Figure 5 and 6: 7 kps on a flat surface.
Figure 7 and 8: 8 kps on 2 triangles.
Figure 9: 12 kps on a hexagon.
Figure 10 and 11: 12 kps on the inner side of a cylinder surface.
Figure 12: 4 kps and 4 revocable or auxiliary kps on a rectangle. Examples

### EXAMPLE 1

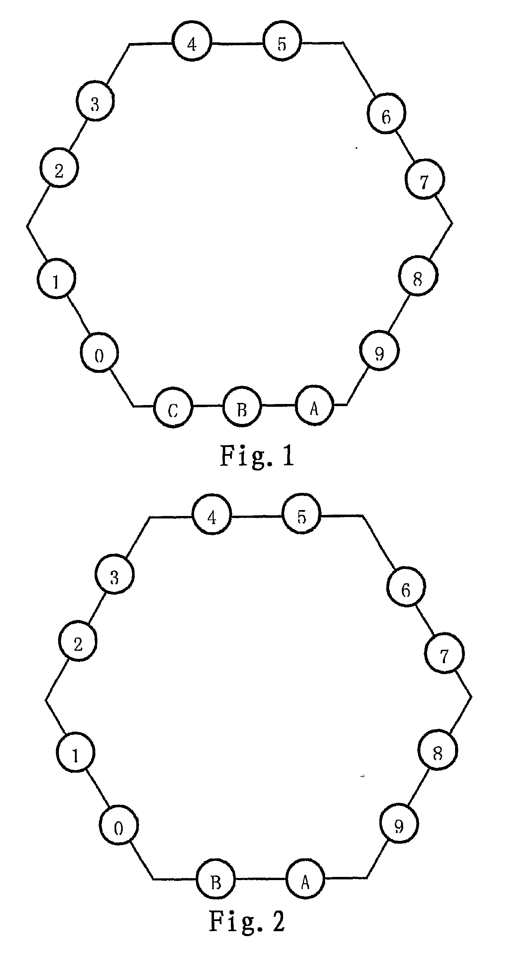

As in figure 1 , there are 13 kps scattered evenly at each side of a hexagon, marked as 0, 1, 2, 3, 4, 5, 6, 7, 8, 9, A, B, C. Each kp is circular. Once kp C is entered, there shall be 12 kps from kp 0 to kp B as in figure 2. For every 2 kps, without passing through any other kps, the cursor shall move along a straight line inside the screen, and the mouse shall move along a straight line on a flat surface or a shortest line on a curved surface.

### Example 2

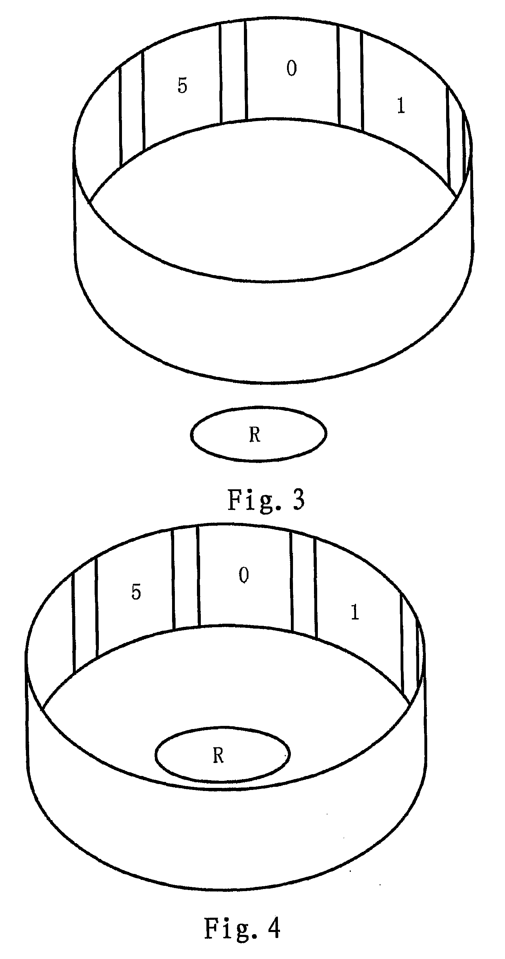

As in figure 3, there are 6 kps scattered evenly on the inner side of a cylinder surface. Below the cylinder surface, there is a redial kp marked as R. For every 2 kps, you shall move along a straight line in the air, without passing through any other kps.

### Example 3

As in figure 4, there are 6 kps scattered evenly on the inner side of a cylinder surface. At the bottom of the cylinder surface, there is a flat surface. At the center of the flat surface, there is a redial kp marked as R. The pressure over a kp is symbolized as F. If F≥F0, kp R is effective. For every 2 kps, you shall move one to another along a straight line in the air or on the flat surface, without passing through any other kps.

### Example 4

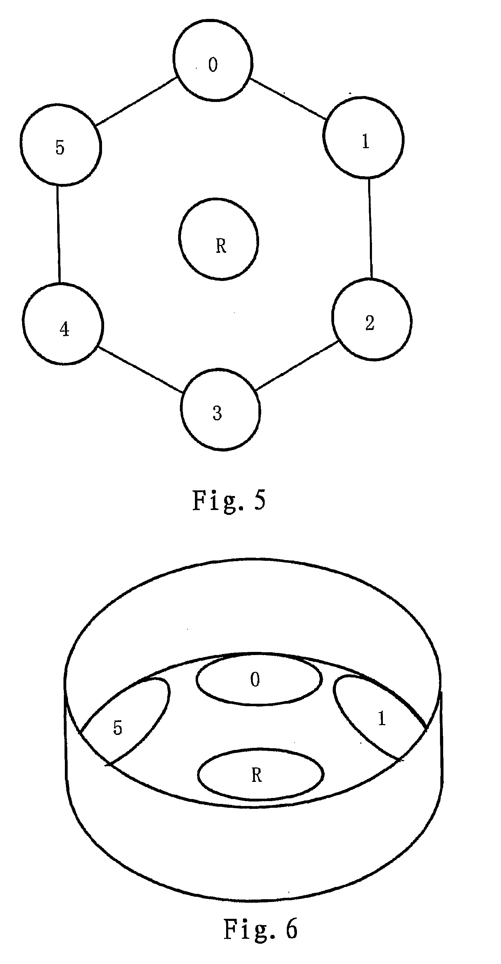

As in figure 5, there are 6 kps at the 6 peak points of a hexagon. At the center of the hexagon, there is a redial kp marked as R. If F≥F0, kp R is effective. For every 2 kps, you shall move from one to another along a straight line on the flat surface, without passing through any other kps. As in figure 6, there is a cylinder surface on the flat surface of the hexagon. Thus moving out of a kp shall be held back by the cylinder surface.

### Example 5

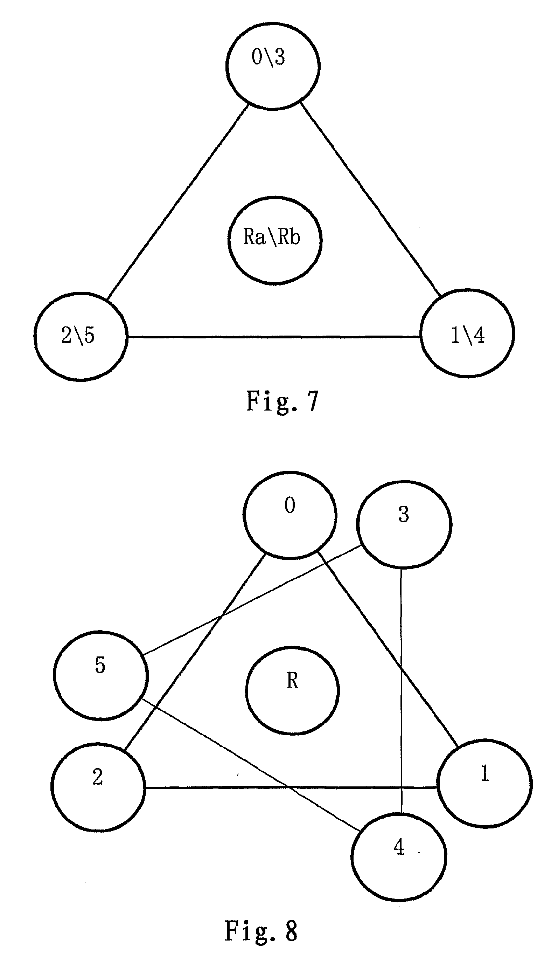

As in figure 7, there are 3 kps at the 3 peak points of a triangle. At the center of the triangle, there is a redial kp marked as R. If F≥F0 and F<F1, then there are kp 0, kp 1, kp 2 and kp Ra; if F>F1, then the there are kp 3, kp 4, kp 5 and kp Rb.

After the input of a kp, if kp Ra or kp Rb is entered, the other kp of the same area shall be entered. For example, moving from kp 1 to kp Rb shall enter kp 1 and kp 4. Moving from kp 1 to kp Ra shall enter kp 1 and kp 1.

### Example 6

As in figure 8, if F≥F0 and F<F1, there are kp 0, kp 1, kp 2 at the 3 peak points of a triangle, and a redial kp marked as Ra at the center; if F>F1, there are kp 3, kp 4and kp 5 at the 3 peak points of a triangle, and a redial kp marked Rb at the center. The two triangles are not in the same area. Kp Ra and kp Rb are in the same area. Also, Ra and Rb may act as the same as one kp R.

### Example 7

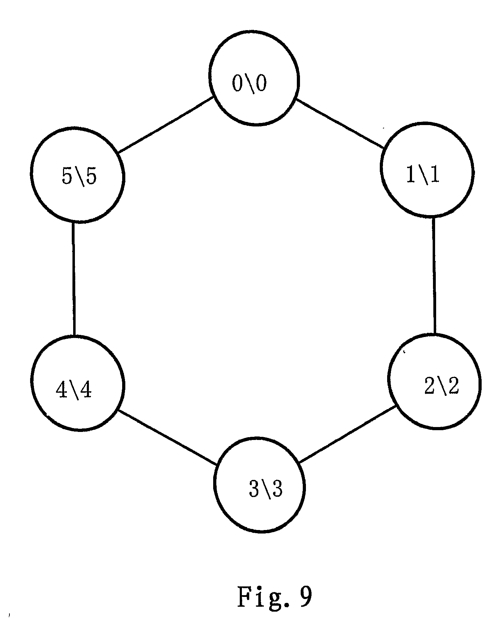

As in figure 9, there are 6 kps at the 6 peak points of a hexgon. If F≥F0 and F<F1, then there are kp 0, kp 1, kp2, kp 3, kp 4 and kp 5. If F>F1, there are the same kps. Thus when F is altered on a kp, or to say, moving along a straight line in the air, the kp shall be repeated.

### Example 8

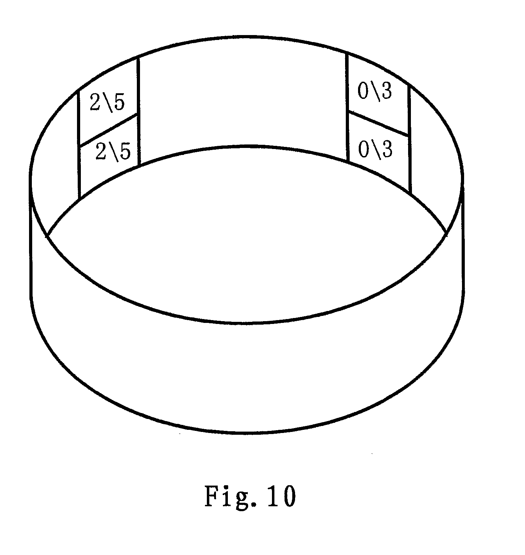

As in figure 10, there are 3 areas on the inner side of a cylinder surface.

Each area is evenly divided into 2 parts: the upper and the lower. If F≥F0 and F<F1, there are kp 0, kp 1 and kp 2 on the upper part or the lower part; if F>F1, there are kp 3, kp 4 and kp 5 on the upper part or the lower part. If moving from a kp on the upper part to the same kp on the lower part, the kp shall be repeated. The moving line is a straight line on the inner side of the cylinder surface, or to say, the shortest line on a curved surface. Moving along a straight line from kp 3 on the upper part to kp 0 on the lower part, and F is becoming smaller on the way, just like releasing a button, then kp 3 and kp 0 shall be entered.

### Example 9

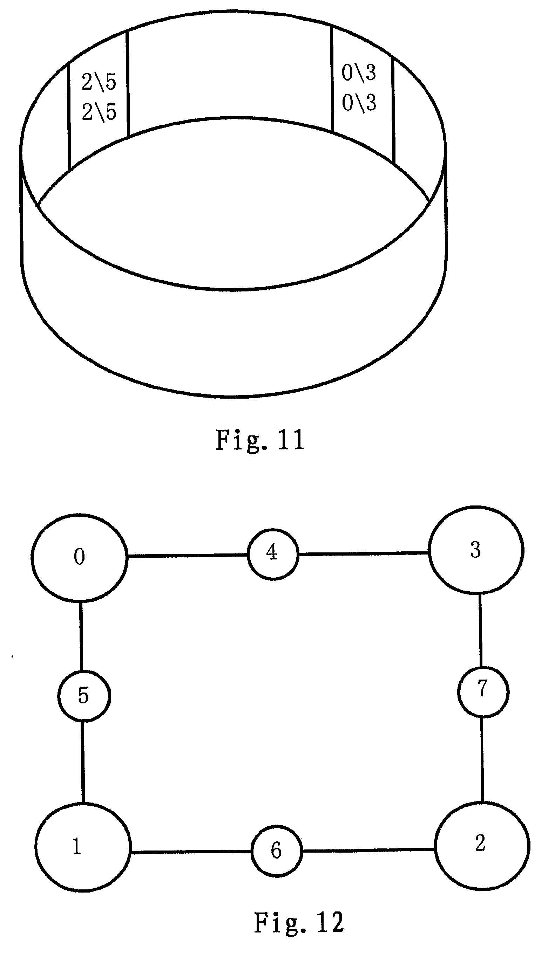

As in figure 11, there are 3 areas on the inner side of a cylinder surface. The pressure on the bottom surface is symbolized as Fb. The pressure on the inner side of the cylinder surface is symbolized as Fa.

If Fb≥F0 and Fb<F1, there are kps on the upper part; if Fb>F1, there are kps on the lower part.

If Fa≥F0 and Fa<F1, there are kp 0, kp 1 and kp 2 on the upper part or the lower part; if F>F1, there are kp 3, kp 4 and kp 5 on the upper part or the lower part. It is the almost the same as example 9, but the kps of the upper part and the kps of the lower part are much closer.

### Example 10

As in figure 12, there are kp 0, kp 1, kp 2 and kp 3 at the 4 peak points of a rectangle, kp 5, kp 6, kp 7 and kp 8 at the 4 middle points.

Kp 5 and kp 7 are revocable kps. Kp 4 and kp 6 are auxiliary kps, the input of kp 4 or kp 6 shall make every kp shine for 2 seconds.

The combinations of kp 4, kp 5 and kp 6 shall enter 4 punctuations. For example, the input of kp 5 and kp 6 shall enter a question mark "?".

The combinations of kp 0, kp 1and kp 2 shall enter the 26 Latin letters in lower case. For example, the input of kp 0, kp3 and kp 0 shall enter a letter "a".

## Claims

1. A computer keyboard which has at least 5 key positions as follows: for every 2 key positions, without passing through any other key positions, you shall move from one key position to another along a straight line in the air or a straight line on a flat surface or a shortest line on a curved surface.

2. A keyboard referred in claim 1, you shall rotate around a point.

3. A computer keyboard which has at least 2 key positions as follows: for every 2 key positions, you shall move from one key position to another along a straight line in the air or a straight line on a flat surface or a shortest line on a curved surface; and for at least a couple of key positions, there is at least 1 key position revocable or auxiliary.

4. A keyboard referred in claim 3, you shall rotate around a point.

5. A keyboard referred in claim 1 to 4, there is at least 1 redial key position and at least 1 responsible key position, after the input of the responsible key position, the input of the redial key position shall be equal to that of the responsible key position.

6. A keyboard referred in claim 5, the distance from the redial key position to every responsible key position shall be equal.

7. A keyboard not included in claim 1 or 3 or 5, has at least 2 key positions as follows: you shall move from one key position to another along a straight line in the air or a straight line on a flat surface or a shortest line on a curved surface; with every motion, a key position shall be entered; the keyboard is used for chief and continuous input, or for emergency input.

8. A keyboard referred in claim 7, you shall rotate around a point.
